# EUROPEAN PATENT APPLICATION

(11) **EP 1 424 688 A2**
(43) Date of publication of application: **02.06.2004**
(21) Application number: 03257427.9
(22) Date of filing: 25.11.2003
(51) Int. Cl.: G11B 5/39, G11B 5/00

(54) **Spin valve head and magnetic recording device using the same**

(30) Priority: 26.11.2002 JP 2002341924
(71) Applicant: FUJITSU LIMITED, Kawasaki-shi, Kanagawa 211-8588 (JP)
(72) Inventor: Zhang, Yiqun, Shenzhen P.R. 518038 (CN); Noma, Kenji, Kawasaki-shi Kanagawa 211-8588 (JP); Kanai, Hitoshi, Kawasaki-shi Kanagawa 211-8588 (JP)
(74) Representative: Hitching, Peter Matthew

(57) **Abstract**

The spin valve head is capable of having a secure specular effect, increasing MR-ratio and Hua and outputting a prescribed head power when the head (36) accesses a recording medium (30) having high surface recording density. The spin valve head comprises: a first pinned magnetic layer (141); a non-magnetic layer (15) being formed on the first pinned magnetic layer (141); and a second pinned magnetic layer (142) being formed on the non-magnetic layer (15). An insulating specular layer (22) is provided between the first pinned magnetic layer (141) and the second pinned magnetic layer (142).

## Description

The present invention relates to a spin valve head and a magnetic recording device using the spin valve head.

These days, surface recording density of magnetic recording devices are made greater, and magnetic heads are made smaller and smaller. A Magneto-Resistive (MR) head, which detects variations of signal magnetic fields in a magnetic recording medium as variations of electrical resistivity, is used as a reproducing head. A rate of changing electric resistance (MR-ratio) of a spin valve head is greater than that of a conventional MR element, so the spin valve head is used as an MR element for great surface recording density.

A previously-proposed spin valve head has a spin valve film, in which an antiferromagnetic layer, a pinned magnetic layer (a fixed magnetic layer), an intermediate layer, a free layer, etc. are piled, and electrodes are formed on the both sides of the spin valve film. An electric current runs in parallel to a surface of the spin valve film. This spin valve head called a CIP (Current In Plane) type is mainly used.

However, if surface recording density of a magnetic recording medium is further increased, the MR-ratio of the CIP type spin valve head is lowered, so that an output power of the head is reduced. To increase the output power of the head, a synthetic ferrimagnet spin valve head, in which an electric current runs perpendicular to the surface of the spin valve film, is used.

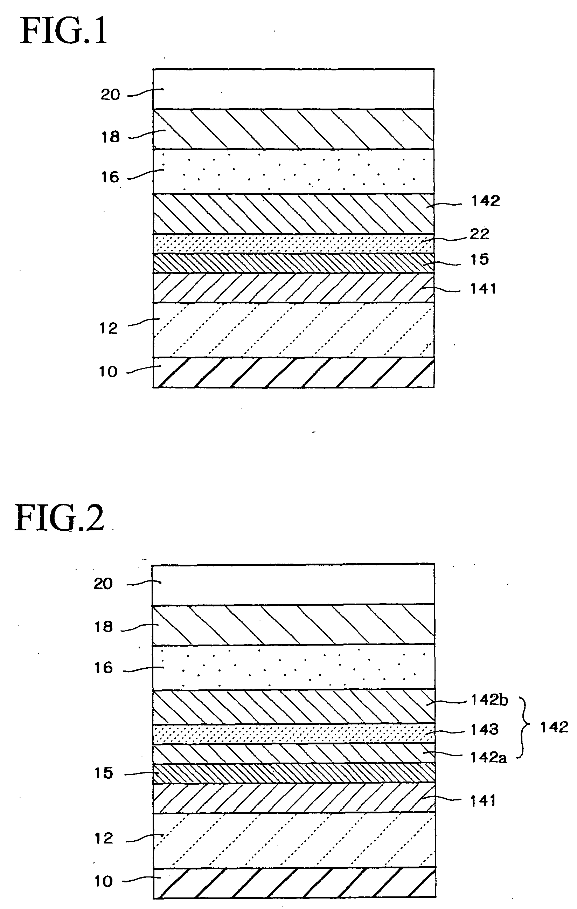

The spin valve film of the synthetic ferrimagnet spin valve head is shown in Fig. 2. In the spin valve film, an antiferomagnetic layer 12, a first pinned magnetic layer 141, a non-magnetic layer 15 made of, for example, ruthenium, a second pinned magnetic layer 142, an intermediate layer 16, a free layer 18 and a gap layer 20 are piled on a base layer 10 in that order. Magnetizing directions of the first pinned magnetic layer 141 and the second pinned magnetic layer 142 are mutually opposite. The non-magnetic layer 15 exchange-couples the first pinned magnetic layer 141 with the second pinned magnetic layer 142.

The second pinned magnetic layer 142 includes a pinned-2A layer 142a and a pinned-2B layer 142b, and a specular layer 143 is formed between the pinned-2A layer 142a and the pinned-2B layer 142b. The specular layer 143 specular-reflects electrons on a boundary face between a metal and an insulator so as to make magnetic resistance greater (see Japanese Patent Publication No. 2000-252548).

Magnetic characteristics of the spin valve film having the specular layer 143 shown in Fig. 2 are highly influenced by thickness of the the pinned-2A layer 142a and the pinned-2B layer 142b.

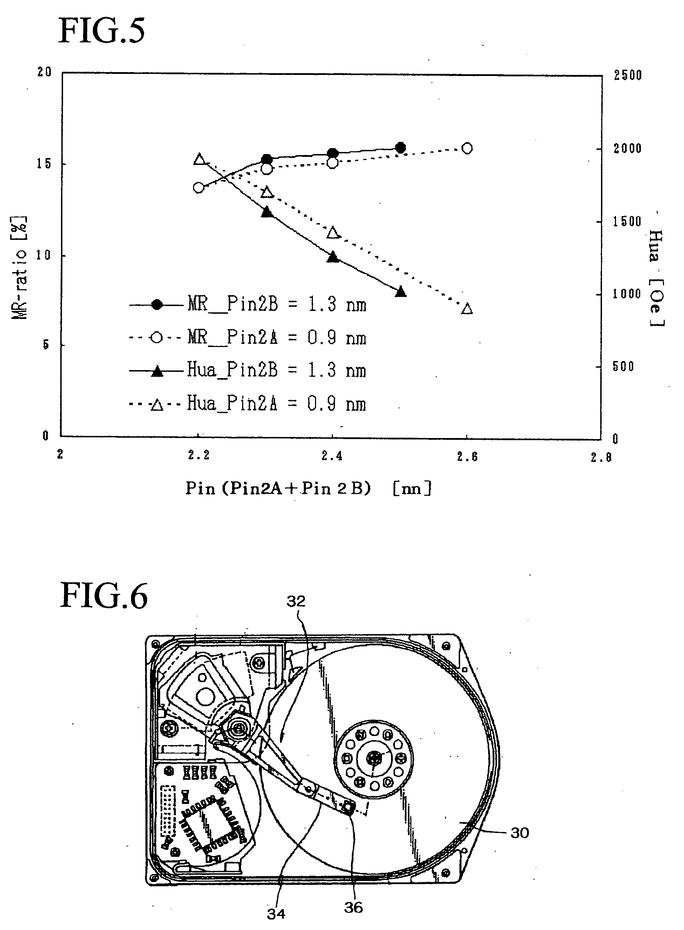

Variations of the MR-ratio and one way anisotropy field (Hua values) with respect to thickness of the second pinned magnetic layer 142 are shown in Fig. 5. Note that, thickness of the first pinned magnetic layer 141 was 1.2 nm; thickness of the pinned-2A layer 142a was 0.9 nm; and thickness of the pinned-2B layer 142b was 1.3 nm; the firs pinned magnetic layer 141 was made of CoFe and had thickness of 1.2 nm; thickness of the non-magnetic layer 15 was 0.85 nm; the intermediate layer was made of Cu and had thickness of 2.2 nm; and the free magnetic layer included a CoFe layer having thickness of 0.5 nm and a CoNiFe layer having thickness of 2.16nm. Total thickness of the second pinned magnetic layer 142 was the sum of the thickness of the pinned-2A layer 142a and the thickness of the pinned-2B layer 142B. In the experiment, firstly the thickness of the pinned-2A layer 142a was fixed to 0.9 nm, and the total thickness of the second pinned magnetic layer 142 was varied; secondly, the thickness of the pinned-2B layer 142b was fixed to 1.3 nm, and the total thickness of the second pinned magnetic layer 142 was varied.

According to the results shown in Fig. 5, the MR-ratio slightly increased with increasing the total thickness of the second pinned magnetic layer 142. On the other hand, the Hua reduced relatively fast with increasing the total thickness of the second pinned magnetic layer 142. Particularly, the Hua reduced faster when the thickness of the pinned-2B layer 142b was fixed and the thickness of the pinned-2A layer 142 was made thicker. Therefore, the results teaches that making the pinned-2A layer 142a thin and making the pinned-2B layer 142b thick are effective to increase the MR-ratio and the Hua values.

In the conventional spin valve film having the specular layer 143, oxygen diffusion occurs in the specular layer 143, which is formed by oxidizing the pinned-2A layer 142a, so that secular deterioration of electrical insulation will occur. By the deterioration, reliability of the spin valve head must be lowered.

It is desirable to solve the problems of the conventional spin valve head.

It is also desirable to provide a spin valve head, which is capable of having a secure specular effect, increasing MR-ratio and Hua and outputting a prescribed head power when the head accesses a recording medium having high surface recording density.

It is also desirable to provide a magnetic recording device using the spin valve head.

The spin valve head of one embodiment of the present invention has the following structures.

Namely, the spin valve head comprises: a first pinned magnetic layer; a non-magnetic layer being formed on the first pinned magnetic layer; and a second pinned magnetic layer being formed on the non-magnetic layer, and is characterized by an insulating specular layer being provided between the first pinned magnetic layer and the second pinned magnetic layer.

In the spin valve head, the insulating specular layer may be provided between the non-magnetic layer and the second pinned magnetic layer.

In the spin valve head, the insulating specular layer may be made of an oxide of an alloy including at least one of Co, Ni and Fe.

In the spin valve head, thickness of the insulating specular layer may be 0.6-1.0 nm.

In the spin valve head, the insulating specular layer may be an oxide film, which is formed by oxidizing a metal layer. For example, the metal layer is oxidized by a process selected from natural oxidization, plasma oxidization and ion beam oxidization.

In the spin valve head, the insulating specular layer may be a metal oxide film formed, on the non-magnetic layer, by a film forming process. For example, the film forming process is selected from spattering, evaporation and CVD (Chemical Vapor Deposition).

In the spin valve head, the insulating specular layer may be formed by forming a film of the oxide on the non-magnetic layer in a chamber and introducing oxygen into the chamber to stick oxygen onto a surface of the non-magnetic oxide film.

A magnetic recording device embodying the present invention has a magnetic head section for reproducing data recorded on a magnetic recording medium, and the magnetic head section preferably includes the spin valve head described above.

A spin valve head embodying the present invention can be used as a magnetic head element having good MR-ratio and Hua value. The magnetic head element has superior and stable characteristics. By assembling the spin valve head in a magnetic recording device, the magnetic recording device, which is capable of securely recording data on a magnetic recording medium having high surface recording density, can be provided.

Reference will now be made, by way of example, to the accompanying drawings, in which:
Fig. 1 is a schematic view showing a constitution of a spin valve head of an embodiment of the present invention;
Fig. 2 is a schematic view showing the constitution of a conventional spin valve head;
Fig. 3 is a graph showing MR-ratio and Hua values of the spin valve head of the embodiment;
Fig. 4 is a graph showing MR-ratio and Hua values of the conventional spin valve head;
Fig. 5 is a graph showing MR-ratio and Hua values with respect to the thickness of the second pinned magnetic layer; and
Fig. 6 is a plan view of a magnetic recording device having a magnetic head section, which includes the spin valve head of the embodiment.

Fig. 1 is a schematic view showing a constitution of a spin valve head of an embodiment of the present invention. A base layer 10 is formed on a substrate, e.g., a ceramic wafer. The base layer 10 of the present invention is made of NiCr. The base layer 10 is formed by a proper film forming process, e.g., spattering, evaporation, CVD (Chemical Vapor Deposition).

An antiferromagnetic layer 12 is formed on the base layer 10. The antiferromagnetic layer 12 acts as a layer for applying an exchange bias magnetic field, and it is made of an antiferromagnetic material, e.g., PtMn, PdPtMn. The antiferromagnetic layer 12 is also formed by a proper film forming process, e.g., spattering, evaporation, CVD.

A first pinned (sandwiched) magnetic layer 141 is formed on the antiferromagnetic layer 12. A non-magnetic layer 15, which is made of a non-magnetic material, e.g., ruthenium, is formed on the first pinned magnetic layer 141. An insulating specular layer 22 is formed on the non-magnetic layer 15. A second pinned magnetic layer 142 is formed on the specular layer 15. Magnetizing directions of the first pinned magnetic layer 141 and the second pinned magnetic layer 142 are fixed and mutually opposite.

The first pinned magnetic layer 141 and the second pinned magnetic layer 142 are made of a ferromagnetic material, e.g., CoFe alloy, CoFeB alloy. The first pinned magnetic layer 141 and the second pinned magnetic layer 142 are formed by a proper film forming process, e.g., spattering, evaporation, CVD. Thickness of the first pinned magnetic layer 141 and the second pinned magnetic layer 142 may be optionally selected. In the present embodiment, their thickness are 1-2 nm.

The non-magnetic layer 15 acts as an exchange coupling layer between the first pinned magnetic layer 141 and the second pinned magnetic layer 142. The non-magnetic layer 15 is formed on the first pinned magnetic layer 141 by a proper film forming process, e.g., spattering (sputtering), evaporation, CVD.

A feature of the spin valve film of the present embodiment is the insulating specular layer 22 formed on the non-magnetic layer 15. The insulating specular layer 22 is made of an oxide and formed on the non-magnetic layer 15 as an insulating layer.

A process of forming the insulating specular layer 22 will be explained. Firstly, a metal layer, which is made of a metal, e.g., Co, Ni, Fe, or an alloy, e.g., CoNiFe, is formed on the non-magnetic layer 15 by a proper film forming process, e.g., spattering, evaporation, CVD. Then, the metal layer is oxidized, by a proper oxidization process, e.g., natural oxidization, plasma oxidization, ion beam oxidization, so as to form an oxide film. By forming the oxide film, the insulating specular layer 22 is completed.

Another process may be employed. For example, an oxide of a metal, e.g., Co, Ni, Fe, or an alloy, e.g., CoNiFe, is used as a source material, and an oxide film is formed on the non-magnetic layer 15, as the insulating specular layer 22, by a proper film forming process, e.g., spattering, evaporation, CVD.

To ensure specular effects of the insulating specluar layer 22, the insulating specular layer 22 is formed by forming the oxide film on the non-magnetic layer 15 in a film forming chamber, then oxygen is introduced into the chamber to stick oxygen onto a surface of the insulating specular layer 22.

The second pinned magnetic layer 142 is formed on the insulating specular layer 22 by a proper film forming process, e.g., spattering, evaporation, CVD.

In the conventional spin valve film shown in Fig. 2, the second pinned magnetic layer 142 includes two sub-layers: the pinned-2A layer 142a and the pinned-2B layer 142b. On the other hand, in the spin valve film of the present embodiment, the second pinned layer 142 is a single layer. This is another feature of the present embodiment.

In Fig. 1, an intermediate layer 16 is an insulating layer. The intermediate layer 16 is made of a non-magnetic material, e.g., Cu. The intermediate layer 16 is also formed by a proper film forming process, e.g., spattering, evaporation, CVD.

A free magnetic layer 18 is made of a soft magnetic material, e.g., CoFe alloy, CoFeB alloy. The free magnetic layer 18 may be a single layer and may include a plurality of sub-layers. The free layer 18 is also formed by a proper film forming process, e.g., spattering, evaporation, CVD.

A gap layer 20 is provided to define a gap between a reproducing head and a recording head. The gap layer 20 is a film formed on the free magnetic layer 18 and made of an insulating material, e.g., alumina. The gap layer 20 is formed by a proper film forming process.

As described above, the feature of the spin valve head of the present embodiment is the non-magnetic layer 15 and the insulating specular layer 22 are provided between the first pinned layer 141 and the second pinned layer 142.

In the conventional spin valve head shown in Fig. 2, the second pinned magnetic layer 142 includes the pinned-2A layer 142a and the pinned-2B layer 142b. The results shown in Fig. 5 teaches that making the pinned-2A layer 142a thin and making the pinned-2B layer 142b thick are effective to increase the MR-ratio and the Hua values.

On the other hand, in the spin valve head of the present embodiment, a pinned magnetic layer corresponding to the pinned-2A layer 142a is omitted, so thickness of the second pinned layer 142, which corresponds to the pinned-2B layer 142b, can be thick. Therefore, the MR-ratio and the Hua values can be effectively increased. Further, the insulating specular layer 22 is not included in the pinned magnetic layers, the specular layer 22 having prescribed characteristics can be easily formed.

In the process of forming the conventional spin valve film, oxidizing the pinned-2A layer 142a must be correctly controlled so as to form the specular layer 143. On the other hand, in the present embodiment, the insulating specular layer 22 is independently formed, so the process of forming the spin valve film is much easier than that of the conventional spin valve film. Therefore, the insulating specular layer 22 can be securely formed, and the spin valve heads having stable characteristics can be easily produced.

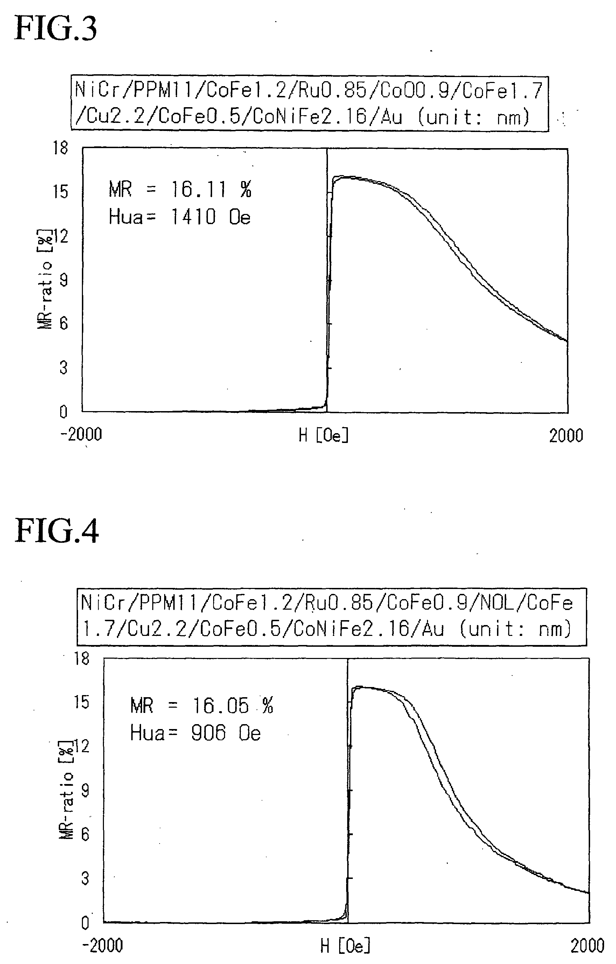

The MR-ratio and the Hua values of the spin valve head of the above described embodiment are shown in Fig. 3; the MR-ratio and the Hua values of the conventional spin valve head are shown in Fig. 4. Experiments were performed under the following conditions.

### [The Spin Valve Head of The Embodiment]

Conditions of the spin valve head are as follows,
the base layer: NiCr
the antiferromagnetic layrer: PdPtMn thickness 11 nm
the first pinned layer: CoFe thickness 1.2 nm
the non-magnetic layer: thickness 0.85 nm
the insulating specular layer: CoO thickness 0.9 nm
the second pinned layer: CoFe thickness 1.7 nm
the intermediate layer: Cu thickness 2.2 nm
the free layer: CoFe thickness 0.5 nm
   CoNiFe thickness 16 nm

The results are the MR-ratio = 16.11 % and Hua = 1410 Oe.

### [The Conventional Spin Valve Head]

Conditions of the conventional spin valve head are as follows,
the base layer: NiCr
the antiferromagnetic layrer: PdPtMn thickness 11 nm
the first pinned layer: CoFe thickness 1.2 nm
the non-magnetic layer: thickness 0.85 nm
the pinned-2A layer: CoFe thickness 0.9 nm
   the nano-specular layer
the pinned-2B layer: CoFe thickness 1.7 nm
the intermediate layer: Cu thickness 2.2 nm
the free layer: CoFe thickness 0.5 nm
   CoNiFe thickness 16 nm

The results are the MR-ratio = 16.05 % and Hua = 906 Oe.

Note that, thickness of the layers corresponding each other were made equal.

According to the results, the MR-ratio of the embodiment is slightly greater than that of the conventional spin valve head, but the Hua value of the embodiment is much greater than that of the conventional spin valve head. Therefore, the spin valve head of the present invention is capable of highly improving the Hua value.

Successively, a magnetic recording device of an embodiment of the present invention will be explained with reference to Fig. 6. The magnetic recording device comprises: a magnetic disk 30, which acts as the magnetic recording medium; an actuator 32 rotatably attached to a base plate of a casing; and a head suspension 34 attached to a front end of the actuator 32. A magnetic head section 36, which reproduces data recorded on the disk 30, is attached to a front end of the head suspension 34. The magnetic head section 36 includes the spin valve head of the above described embodiment. By employing the spin valve head of the present invention, the magnetic head section 36 is capable of reproducing data from the disk 30 having high surface recording density.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A spin valve head,
comprising:
a first pinned magnetic layer (141);
a non-magnetic layer (15) being formed on said first pinned magnetic layer (141); and
a second pinned magnetic layer (142) being formed on said non-magnetic layer (15),
**characterized by**,
an insulating specular layer (22) being provided between said first pinned magnetic layer (141) and said second pinned magnetic layer (142).

2. The spin valve head according to claim 1,
wherein said insulating specular layer (22) is provided between said non-magnetic layer (15) and said second pinned magnetic layer (142).

3. The spin valve head according to claim 1 or 2,
wherein said insulating specular layer (22) is made of an oxide of an alloy including at least one of Co, Ni and Fe.

4. The spin valve head according to claim 1, 2 or 3,
wherein thickness of said insulating specular layer (22) is 0.6-1.0 nm.

5. The spin valve head according to claim 1,
wherein said insulating specular layer (22) is an oxide film, which is formed by oxidizing a metal layer.

6. The spin valve head according to claim 1,
wherein said insulating specular layer (22) is a metal oxide film formed, on said non-magnetic layer, by a film forming process.

7. The spin valve head according to claim 3,
wherein said insulating specular layer (22) is formed by forming a film of the oxide on said non-magnetic layer (15) in a chamber and introducing oxygen into the chamber to stick oxygen onto a surface of the non-magnetic oxide film.

8. The spin valve head according to claim 5,
wherein the metal layer is oxidized by a process selected from natural oxidization, plasma oxidization and ion beam oxidization.

9. The spin valve head according to claim 6,
wherein the film forming process is selected from spattering, evaporation and CVD.

10. A magnetic recording device,
having a magnetic head section (36) for reproducing data recorded on a magnetic recording medium (30),
wherein said magnetic head section (36) includes a spin valve head as claimed in any preceding claim.
